# EUROPEAN PATENT APPLICATION

(11) **EP 4 270 712 A1**
(43) Date of publication of application: **01.11.2023**
(21) Application number: 22171030.4
(22) Date of filing: 29.04.2022
(51) Int. Cl.: H02J 3/38, G06N 3/08

(54) **ENERGY FLOW MANAGEMENT SYSTEM**

(71) Applicant: FRONIUS INTERNATIONAL GmbH, 4643 Pettenbach (AT)
(72) Inventor: KEFER, Kathrin Maria, 4643 Pettenbach (AT); DIEWALD, Nicole, 4643 Pettenbach (AT); MÜHLEGGER, Johannes, 4643 Pettenbach (AT)
(74) Representative: Isarpatent

(57) **Abstract**

A computer-implemented method for optimizing energy flows of controllable devices within an energy system (10), the method comprising the steps of: customizing (S1) a simulation model of the energy system (10) on the basis of configuration data; training (S2) by an artificial intelligence algorithm individual target value controllers (6) associated with controllable devices (12) of the energy system (10) based on measurement data and/or based on generic default data using the customized simulation model of said energy system (10); calculating (S3) by the trained target value controllers (6) target values (TVs) for the associated controllable devices (12) of the energy system (10); and controlling (S4) energy flow related functions of the controllable devices (12) of said energy system (10) in response to the target values (TVs) calculated by the trained target value controllers (6) for the respective controllable devices (12).

## Description

The invention relates to an energy flow management system adapted to perform a computer-implemented method for optimizing energy flows of controllable devices within an energy system.

Renewable energy sources cause increasing fluctuations in energy production. Accordingly, energy management systems are currently becoming more and more important. Energy management systems are provided to distribute the produced renewable energy as efficiently as possible and to support the grid stability of a power supply grid. An energy system including a photovoltaic array and a battery storage can be implemented in a building. An energy management system can be provided to optimize the use of the generated photovoltaic power. In addition to locally available data such as the generated photovoltaic power or the local current energy consumption or the current state of charge of the battery storage units, a conventional energy management system can also make use of forecast data such as weather or power consumption forecasts or adaptive electricity prices to optimize the efficiency of the local energy system.

However, conventional energy flow management systems do not take into account the local behavior of the respective energy management system and/or the usage behavior of the user of the energy system.

Accordingly, it is an object of the present invention to provide a method and system for increasing the efficiency of an energy system taking into account the user or system behavior.

This object is achieved by a computer-implemented method for optimizing energy flows of controllable devices within an energy system comprising the features of claim 1.

The invention provides according to a first aspect a computer-implemented method for optimizing energy flows of controllable devices within an energy system, the method comprising the steps of:
customizing a simulation model of the energy system on the basis of configuration data,
training by an artificial intelligence algorithm individual target value controllers associated with controllable devices of the energy system based on measurement data and/or based on generic default data using the customized simulation model of said energy system,
calculating by the trained target value controllers target values for the associated controllable devices of the energy system and
controlling energy flow related functions of the controllable devices of said energy system in response to the target values calculated for the respective controllable devices.

In a possible embodiment of the computer-implemented method according to the first aspect of the present invention, the simulation model of the energy system is selected from a group of predefined simulation models stored in a data storage and loaded into processing means which can be used to customize the loaded simulation model on the basis of configuration data input by a user via a user interface and/or on the basis of configuration data received from the respective energy system.

In a possible embodiment of the computer-implemented method according to the first aspect of the present invention, computing resources are used to execute the artificial intelligence algorithm to train the individual target value controllers associated with the controllable devices of the respective energy system. These computing resources may comprise cloud-based computing resources.

In a possible embodiment of the computer-implemented method according to the first aspect of the present invention, the trained target value controllers are deployed on control entities of the respective system.

These control entities can comprise a cloud-based control unit, a system control unit of the respective energy system or distributed control units of the controllable devices of the respective energy system.

In a further possible embodiment of the computer-implemented method according to the first aspect of the present invention, the deployed trained target value controllers are executed by the respective control entities to calculate the target values of the associated controllable devices of the energy system.

In a still further possible embodiment of the computer-implemented method according to the first aspect of the present invention, the calculated target values of the controllable devices are encapsulated in a common timetable of the energy system and/or encapsulated in separate device-specific timetables of the respective controllable devices of said energy system.

In a still further possible embodiment of the computer-implemented method according to the first aspect of the present invention, the common timetable of the energy system is transferred to a central energy management entity of the energy system, wherein the target values of the common timetable are supplied by the central energy management entity of the energy system to the associated controllable devices of the energy system to control the energy flow related functions of the respective controllable devices of the energy system.

In a further possible embodiment of the computer-implemented method according to the first aspect of the present invention, the device-specific timetables are transferred to the distributed energy management entities of the controllable devices of the energy system,
wherein the target values of the device-specific timetables received by the distributed energy management entities of the respective controllable devices of said energy system are used to control energy flow related functions of the respective controllable devices of said energy system.

In a still further possible embodiment of the computer-implemented method according to the first aspect of the present invention, a retraining of the individual target value controllers associated with the controllable devices of said energy system by the artificial intelligence algorithm is triggered by a triggering event or on the fly in parallel to the execution on the device.

This triggering event can comprise an elapsed retraining time period, a change of the energy system setup or a change of the energy system configuration and/or a detected change in the surrounding of the energy system and/or a received retraining command.

In a still further possible embodiment of the computer-implemented method according to the first aspect of the present invention, the calculated target values comprise parameter target values for device parameters,
parameter limits of device parameters and/or control states of the device parameters.

In a still further possible embodiment of the computer-implemented method according to the first aspect of the present invention, the calculated target values are encapsulated in a time grid of the timetables and/or are time-stamped individually.

In a further possible embodiment of the computer-implemented method according to the first aspect of the present invention, the controllable devices of the energy system comprise power-consuming devices, power-storing devices, power-generating devices and/or power-transforming devices of the energy system.

In a further possible embodiment of the computer-implemented method according to the first aspect of the present invention, the simulation model used for customization comprises an electrical simulation model and/or a thermal simulation model of an energy system of a real world building, in particular a MATLAB simulation model.

In a further possible embodiment of the computer-implemented method according to the first aspect of the present invention, the artificial intelligence algorithm used for training the target value controllers comprises a self-learning algorithm.

This self-learning algorithm can comprise a genetic programming algorithm with symbolic regression.

In a possible implementation, the self-learning algorithm comprises a Non-Dominated sorting Genetic Algorithm II or an Offspring Selection Genetic Algorithm.

The invention further provides according to a further aspect an energy flow management system comprising the features of claim 15.

The invention provides according to the second aspect an energy flow management system having processing means adapted to perform the computer-implemented method according to the first aspect of the present invention.

In the following, possible embodiments of the different aspects of the present invention are described in more detail with reference to the enclosed figures.
- Fig. 1: shows a flowchart of a possible exemplary embodiment of a computer-implemented method for optimizing energy flows of controllable devices within an energy system according to the first aspect of the present invention;
- Fig. 2: shows a further flowchart diagram for illustrating a possible exemplary embodiment of a computer-implemented method for optimizing energy flows of controllable devices within an energy system according to the first aspect of the present invention;
- Fig. 3: shows a further flowchart of a further exemplary embodiment of a computer-implemented method for optimizing energy flows of controllable devices within an energy system according to the first aspect of the present invention;
- Fig. 4: shows a block diagram for illustrating the operation of a computer-implemented method for optimizing energy flows of controllable devices within an exemplary energy system according to the present invention as shown in Figs. 1 to 3;
- Fig. 5: shows a schematic diagram for illustrating a possible exemplary embodiment of a computer-implemented method for optimizing energy flows of controllable devices within an energy system according to the first aspect of the present invention as shown in Figs. 1 to 3;
- Fig. 6: shows a further schematic diagram for illustrating a further exemplary embodiment of a computer-implemented method for optimizing energy flows of controllable devices within an energy system as shown in Figs. 1 to 3;
- Fig. 7: shows a further schematic flowchart for illustrating sub steps of a training procedure within a computer-implemented method according to the first aspect of the present invention;
- Fig. 8: illustrates variation sub step within the training procedure shown in Fig. 7 using a genetic programming algorithm in a possible exemplary implementation of the computer-implemented method according to the first aspect of the present invention.

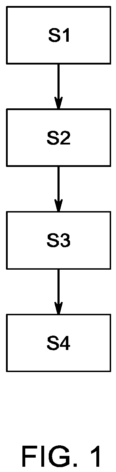

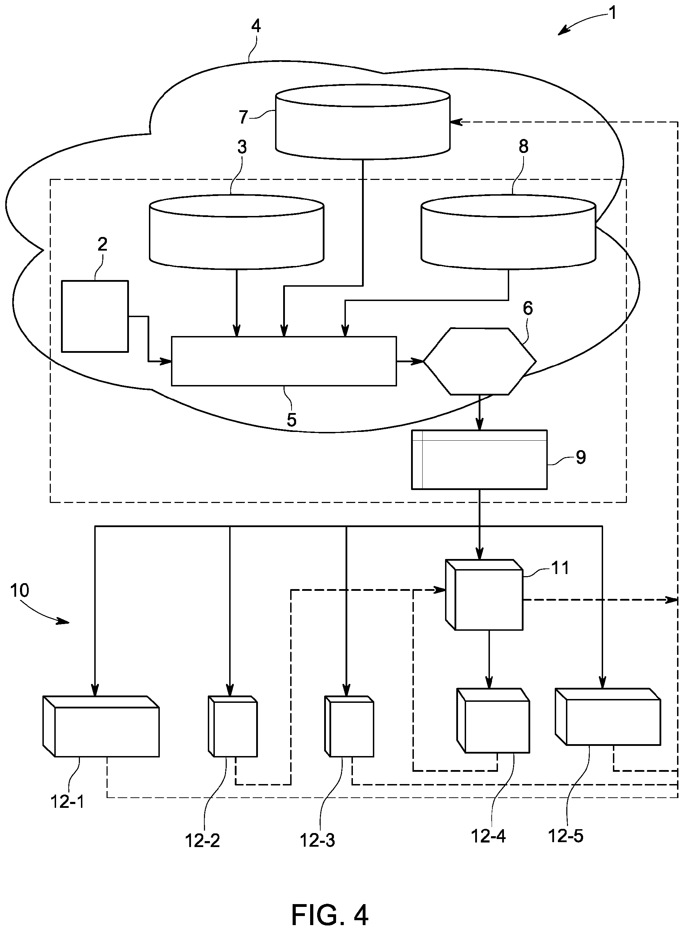

As illustrated in the flowchart diagram of Fig. 1, the computer-implemented method for optimizing energy flows of controllable devices within an energy system such as energy system 10 illustrated in Fig. 4 may comprise in a possible implementation several main steps.

In a first step S1, a simulation model of the energy system can be customized on the basis of available configuration data. The configuration data can be input in a possible implementation via a user interface by a user of the energy system. Further, the configuration data can also be received from the respective energy system, e.g. from a configuration data memory of the energy system through a communication data link. A simulation model of the energy system is customized in step S1 to match the respective energy system, i.e. to match the system behavior of the energy system but also the user behavior of the at least one user of the respective energy system, e.g. the behavior of a person living in a building comprising the energy system to heat up rooms in the building or to heat up water in a boiler for a warm water supply or to store electrical power consumed by appliance devices in the building.

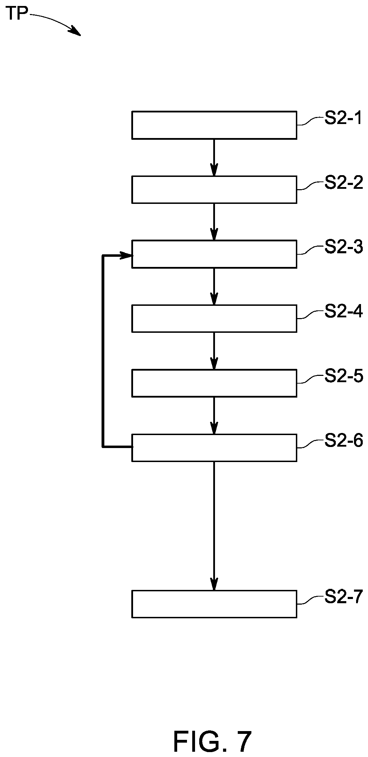

In a further step S2, individual target value controllers associated with controllable devices of the respective energy system are trained by an artificial intelligence algorithm using measurement data and/or generic default data and using the simulation model of the energy system customized in step S1. A possible embodiment of the training procedure TP performed in step S2 is illustrated in Fig.7. The training procedure TP comprises a loop as shown in Fig.7.

In a further step S3, target values TVs for the associated controllable devices of the respective energy system are calculated by the trained target value controllers in time intervals ranging from milliseconds to several hours. The calculated target values TVs can be stored in timetables TTs for transfer to control entities of the energy system. The trained target value controllers may also be deployed on control entities of the energy system such as PLCs.

In a final step S4, energy flow related functions of controllable devices of the energy system are controlled by control entities of the controllable devices in response to (pre-) calculated target values TVs received by the control entities within timetables TT transferred to the control entities. The target values TVs may also be calculated in real time on the fly by trained target value controllers deployed on control entities of the respective controllable devices of the energy system. The target values TVs applied by the control entities to the controllable devices may comprise set values.

The simulation model customized in step S1 can in a possible embodiment of the computer-implemented method be selected from a group of predefined simulation models stored in a data storage and loaded into processing means. The processing means are used to customize the loaded simulation model in step S1 on the basis of the configuration data input by the user via the user interface and/or on the basis of configuration data received from a configuration data memory of the energy system itself. The processing means can comprise computing resources used to execute the artificial intelligence algorithm to train automatically the individual target value controllers associated with the controllable devices of the respective energy system.

The target value controllers trained in step S2 by the artificial intelligence algorithm can be used to calculate optimized target values TVs embedded in timetables TTs which can be transferred via a communication data link to different kinds of control entities. These control entities can comprise a cloud-based control unit for remote control of controllable devices of the energy system, a local system control unit of the respective energy system but also distributed control units of the different controllable devices within the respective energy system. The controllable devices can comprise different kinds of devices, in particular power-consuming devices, power-storing devices, power-generating devices and/or power-transforming devices within the energy system.

The respective energy system can be represented by a simulation model. This simulation model can comprise in a possible embodiment an electrical simulation model and/or a thermal simulation model of an energy system of a real world building such as a residential building of a user.

The trained target value controllers are executed in step S3 of the computer-implemented method as illustrated in the flowchart of Fig. 1 to calculate optimized target values TVs of the associated controllable devices within the energy system represented by the customized simulation model.

In a possible embodiment, the target values TVs for the associated controllable devices of the energy system calculated in step S3 can be encapsulated in a common timetable TT-SYS of the energy system. In an alternative embodiment, the calculated target values can also be encapsulated in separate device-specific timetables TT-DEVs of the respective controllable devices of the energy system. Also a mix of using a common timetable TT-SYS for a group of controllable devices and using dedicated device specific timetables TT-DEV for other controllable devices is possible.

If the calculated target values are encapsulated in a common timetable TT-SYS of the energy system, the common timetable can in a possible embodiment be transferred to a central energy management entity of the respective energy system. The target values TVs of this common timetable TT-SYS can be supplied or forwarded by the central energy management entity of the energy system to the associated control entities of controllable devices of the energy system to control in step S4 the energy flow related functions of the respective controllable devices of said energy system, i.e. functions having an impact on the energy or power flow between components of the respective energy system.

On the other hand, if the calculated target values TVs are encapsulated in separate device-specific timetables TT-DEVs of controllable devices of the energy system, the device-specific timetables can be transferred to the distributed energy management entities of the controllable devices of the energy system. The target values TVs of the device-specific timetables TT-DEVs received by the distributed energy management entities of the respective controllable devices of the energy system are used to control energy flow related functions of the controllable devices within the energy system-.

In a possible embodiment of the computer-implemented method according to the first aspect of the present invention, a retraining of the individual target value controllers associated with the controllable devices of the energy system can be performed by the artificial intelligence, AI, algorithm. This retraining can be triggered by a triggering event. The triggering event for performing the retraining can comprise an elapsed retraining time period, a change of the energy system setup or a change of the energy system configuration. The triggering event can also comprise a detected or forecast change in the surrounding or environment of the respective energy system. Further, the triggering event can comprise a received retraining command. The retraining command can be issued by an operator of a manufacturer of components of the energy system such as an inverter or a photovoltaic array of the energy system monitoring the energy flows of the energy system or by a local user of the energy system or person living in a building where the energy system is installed. The retraining may also be triggered by a third party such as the operator of a power supply grid to which the energy system is connected to exchange electrical energy on demand.

The target values TVs calculated in step S3 can comprise parameter target values for device parameters, parameter limits of device parameters and/or control states of the respective device parameters. The calculated target values TVs can be encapsulated in a time grid of the timetables TTs and/or can be time-stamped individually. The timetable TT may comprise columns for the different target values TVs and rows for different time points or time slots within a time grid, lasting e.g. a predefined number of msec, seconds, minutes or hours depending on the use case.

The simulation model of the energy system used for customization in step S1 of the computer-implemented method can comprise in a possible embodiment a MATLAB simulation model. Further, the artificial intelligence algorithm used for training the target value controllers in step S2 can comprise a self-learning algorithm, in particular a genetic programming algorithm performing symbolic regression. This genetic programming algorithm can comprise in a preferred embodiment a NSGA-II algorithm. In an alternative embodiment, the genetic programming algorithm can also comprise an OSGA algorithm.

In a possible embodiment, the computer-implemented method according to the present invention is designed to keep energy costs of the energy system as low as possible. This is achieved by taking into account the individual user behavior and/or the local system behavior of the energy system. The controllers are adapted as soon as the behavior of the real world energy system does change. The behavior of the real world energy system may for instance change because of additional appliances or a changed individual user behavior of the user operating the respective energy system. The computer-implemented method according to the present invention can be used for a variety of different kinds of energy systems or energy system types. The energy system can be implemented in small buildings, flats or even huge buildings such as production sites. The simulation model used for accurate simulation of the energy system implemented in the respective building can include all components and appliances of the energy system and can also model the user behavior. The self-learning artificial intelligence algorithm can use the customized simulation model together with historical data, in particular measurement data to train optimal energy flow controllers. The trained target value controllers can then be forwarded or deployed on control entities or computing units. The control entities can include cloud-based control units but also local computers, in particular a system control unit of the respective energy system or even distributed control units of the different controllable devices implemented in the respective local energy system. The trained and deployed target value controllers are then executed within the energy flow management system in order to create timetables TTs with optimal control values i.e. target values TVs for the different controllable appliances or devices within the respective energy system.

The simulation model representing the energy system of the building can be built up in a possible embodiment by building blocks of single electrical and/or thermal components of the real world building. These components can comprise controllable devices of the energy system, in particular controllable power-consuming devices or loads, controllable storing devices such as battery storage devices, controllable power-generating devices such as photovoltaic arrays and/or power-transforming devices of the energy system. In order to model the user behavior and the system behavior as precisely as possible, several different user inputs collected from a web-site can be used. These user inputs can be used to provide configuration data for customizing the respective simulation model of the local energy system. The configuration data input by the user via a user interface can for instance comprise a number of persons living in the respective building where the energy system is implemented or how many of them are employed. A further example for configuration data input by the user may comprise living area square meters of the building where the energy system is implemented. Building blocks of the simulation model can be implemented in a general way and then customized in step S1 to each single real world energy system by configuring them with the exact real world parameters and measured data. Additionally, the model blocks of the simulation model can be connected with each other in different ways so that it is possible with a small amount of single building blocks of the simulation model to model precisely various different and complex energy systems.

In a possible embodiment of the computer-implemented method according to the first aspect of the present invention, the artificial intelligence algorithm can use the simulation model customized in step S1 together with measured historical system data. If measurement data is not available generic default data can be used by the artificial intelligence algorithm to train the individual target value controllers associated with the controllable devices of the respective energy system. These default data can comprise for instance a standard load or a warm water tipping profile. The default data can be used to train heuristic controllers which are adapted to minimize/reduce the energy costs of the energy system, i.e. to maximize/increase the efficiency of the respective energy system. Due to the self-learning nature of the artificial intelligence algorithm, retraining of the controllers can be performed automatically as soon as a triggering event does occur. This retriggering event may comprise a predefined retraining time period. The triggering event can further comprise an energy system setup change, for instance if the system changes remarkably. Further, the triggering event can comprise a detected change in the surrounding of the energy system, for example when the season changes from winter to summer.

As soon as the training of the heuristic energy flow controllers has been accomplished, the trained target value controllers can be deployed in hardware control entities of the energy flow management system. The trained target value controllers can replace previously existing running target value controllers of the energy system. Using the currently received system data together with other data such as calculated forecast data, the trained and deployed target value controllers can calculate optimal target values or control target values TVs used for different controllable devices of the respective energy system. These target values TVs can be encapsulated in a timetable TT and be sent to the respective controllable device.

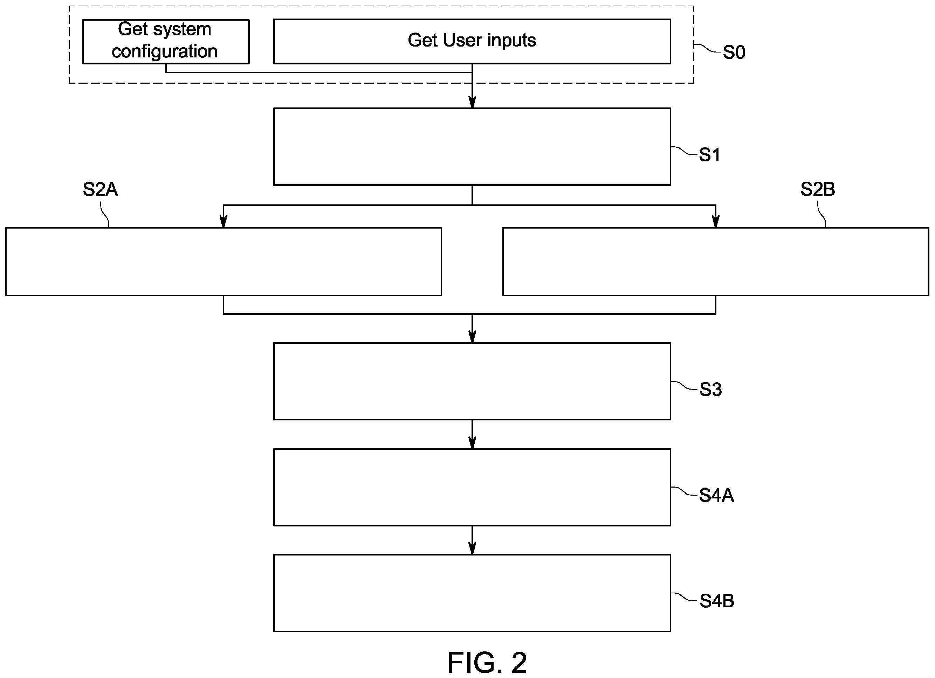

Fig. 2 illustrates a possible exemplary embodiment of a computer-implemented method according to the present invention.

In the illustrated embodiment, in step S0 a system configuration can be loaded and/or a user can input details about his house or household via a user interface. These details may for instance comprise the number of persons living in the household or whether they are employed or not. These details or information can be used as configuration data for customizing the standard initial simulation model of the respective energy system.

The information input in step S0 is used in step S1 for customizing the simulation model of the energy system to match the respective user energy system including the behavior of the controllable devices within the setup energy system and the individual user behavior of the user(s) of the energy system.

In step S2, the artificial intelligence algorithm can be used to train individual target value controllers associated with controllable devices of the energy system. The energy consumption or energy production of the devices over time can be controlled. This can be performed either in step S2A based on available measurement data MDATA or in step S2B based on generic default data. In step S2A, measurement data MDATA received from sensors implemented in the energy system of the user's building can be aggregated and used to train the individual target value controllers for the respective energy system. In case that no measurement data MDATA is available from the user's energy system, other available generic default data can be used to train the target value controllers of the energy system in step S2B.

The measurement data MDATA can be supplied via a wired or wireless communication link to processing means executing the artificial intelligence training algorithm. In case that this communication link is interrupted, available generic default data can be used instead for training the target value controllers in step S2B. This generic default data can be loaded in a possible embodiment from a common database, in particular a cloud-based database.

The trained target value controllers can then be deployed and used to calculate target values TVs for the associated controllable devices of the energy system in step S3. The individual trained controller can be deployed and can be used to calculate for instance a power distribution for every controllable device within the energy system for the next milliseconds or hours depending on the respective implementation and the availability of predictions and measurement data.

In a possible embodiment as illustrated in the flowchart of Fig. 2, the individual trained controller can output a timetable TT in step S4A with the respective power target which can be sent to control entities of controllable devices of the energy system. In step S4B, the controllable device of the energy system is obeying the power target value indicated in the received timetable TT until a new timetable is received by the control entity of the controllable device.

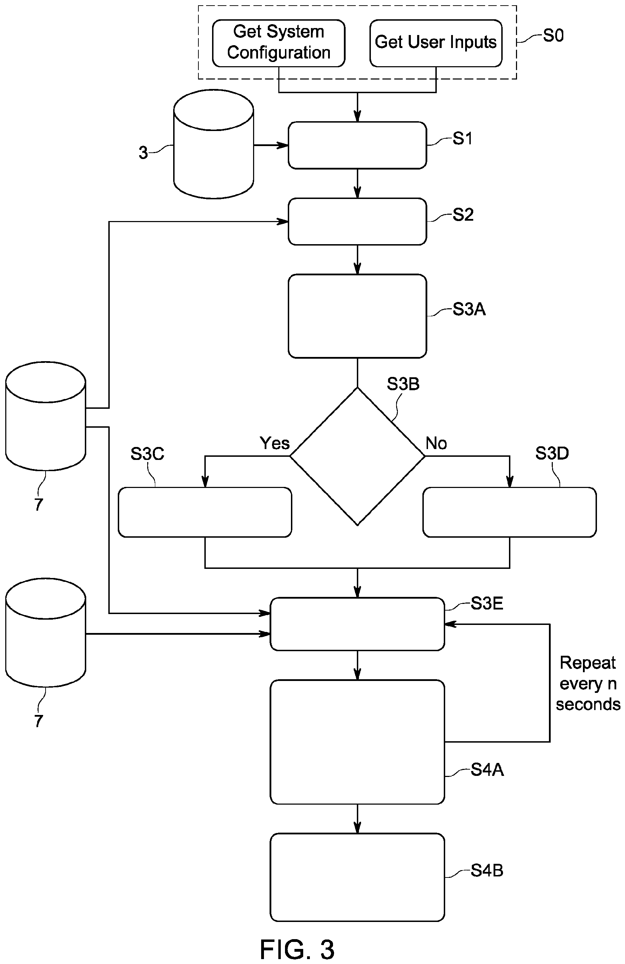

Fig. 3 shows a further schematic diagram for illustrating the operation of a computer-implemented method according to the present invention.

Similar to the embodiment shown in Fig. 2 in the illustrated embodiment of Fig. 3 in step S0 a system configuration can be loaded and/or a user can input details about his house or household via a user interface

As can be seen from Fig. 3, the simulation model of the energy system is customized in step S1 using the User Inputs and the system configuration from step S0 as well as the Model Database. This simulation model can be loaded in a possible implementation from a model database as illustrated in Fig. 3. In a possible embodiment, the simulation model of the energy system is selected from a group of predefined simulation models stored in a data storage and loaded into processing means for performing the customization of the loaded simulation model in step S1. The customization is performed on the basis of a system configuration and/or based on user inputs as illustrated in Fig. 3.

In a further step S2, individual target value controllers associated with different controllable devices of the energy system are trained by an artificial intelligence algorithm based on measurement data MDATA using the customized simulation model. The measurement data MDATA used for training can comprise historical system data as shown in Fig. 3 which can be read e.g. from a measurement database 7 as illustrated in Fig. 4. If no such historical measurement data is available, other data, in particular generic default data, can be used for the training procedure TP read e.g. from a database 8 as illustrated in Fig. 4. A possible implementation of the training procedure TP is illustrated in the flow chart of Fig. 7.

In step S3 the target values TVs for controllable devices are calculated by the trained target value controllers and transferred to the associated control entities of the energy system. In a sub step S3A, the trained target value controllers are sent to an execution environment. This execution environment can comprise control entities including a cloud-based control unit, a system control unit of the respective energy system or distributed control units of different controllable devices implemented within the respective energy system.

As illustrated in Fig. 3, in a further sub step S3B, it can be checked whether an individual target value controller is already executed or running in the respective execution environment or not. If this is the case, the previous running target value controller can be exchanged with the trained or retrained new target value controller in sub step S3C as shown in Fig. 3. If there is no target value controller already running on the respective execution environment, the newly trained individual target value controller can be simply stored in the respective control entity in sub step S3D as shown in Fig. 3. In sub step S3E the trained target value controller is run to optimize the energy flow in the energy system.

The exchanged or implemented trained and deployed target value controller is executed in step S4 for controlling energy flow related functions of controllable devices of the energy system. The executed controllers can use available current system data of the energy system read from a database as shown in Fig.3. The calculated target values TVs can be encapsulated in a common timetable TT-SYS of the energy system in sub step S4A and/or encapsulated in separate device-specific timetables TT-DEVs of the respective controllable devices of the energy system. The created timetables TT can then be sent in sub step S4A to the control entities of the controllable devices of the energy system. The control entities of the devices can then execute the received control values TVs from the received timetables TTs in sub step S4B as shown in Fig. 3. The common timetable TT-SYS of the whole energy system can be transferred in sub step S4A to a central energy management entity of the respective energy system. The target values TVs of this common timetable TT-SYS can be supplied or distributed by the central energy management entity of the energy system to energy management entities of the associated controllable devices of the energy system to control energy flow related functions of the controllable devices of the energy system.

As an alternative, device-specific timetables TT-DEVs can be transferred in sub step S4A to distributed energy management entities of controllable devices of the energy system. The target values TVs of the device-specific timetables TT-DEVs received by the distributed energy management entities of the controllable devices can be used to control energy flow related functions of the respective controllable devices within the energy system of the user.

Fig. 7 illustrates a possible implementation of the training procedure TP as performed in step S2 of the embodiments of the computer-implemented method according to the present invention as illustrated in the flowcharts of Figs. 1, 2, 3. Fig. 7 illustrates possible sub steps of the training procedure TP performed in step S2 of the computer-implemented method.

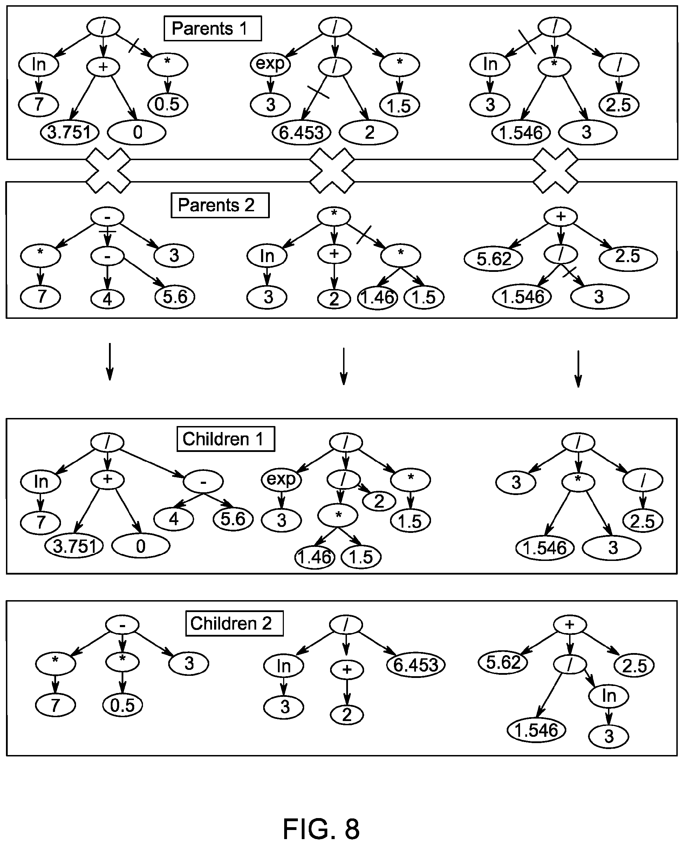

In a first step S2-1 of the training procedure TP, possible solution candidates can be initialized randomly. Fig. 8 shows an example of two (per column) possible parent solution candidates, i.e. parent solution candidate 1 and parent solution candidate 2. As can be seen in Fig. 8, each parent solution candidate can comprise of subtrees provided for each heuristic controller within the modelled energy system 10.

In a further step S2-2, a fitness evaluation for the parent solution candidates can be performed. The different parent solution candidates can be evaluated for the quality (e.g. energy cost reduction or other metric) using a DLL as well as historical system data, which are created once before the start of the training procedure TP.

The DLL generation works for example as described in the following: An optimization framework such as HeuristicLab can be used to initiate a C-code generation from a MATLAB Simulink model forming a simulation model of the energy system 10.

This code can be extended with additional functionality. The optimization framework can then compile the code into a dynamic linked library (DLL). This DLL can then be used for the actual training procedure TP where the framework can use genetic algorithms to solve a symbolic regression optimization problem. The framework can create an initial population of solution candidates as illustrated in Fig. 8 being randomly initialized in step S2-1.

From the parent solution candidates, two candidates can be chosen in a parent selection step S2-3. As shown in Fig. 8 the parent selection is done per column. The selection is for a mating procedure where crossover and mutation is applied in a variation step S2-4 so that new children solution candidates are generated.

Step S2-4 is shown in detail in Fig. 8 as an example with multiple (three) controllers. One controller is responsible for one column. Each crossover is done between a selection from "parent solution candidates one" and a selection from "parent solution candidate two", shown with the "X"-Symbols. The selection is done in this case per column. The mating procedure is done in a way, that there is an exchange of information between the two solution candidates in order to create new children solution candidates - shown with the "arrow"-symbol.

To exchange information one branch from each tree of a solution candidate is cutting off. The Cut-Off Point can be chosen with different strategies, e.g. randomly. The cut branches will be exchanged. The result are the two new children solution candidates.

After this crossover there is for example a mutation of a children solution candidate. This is done for example in one part of the tree (branch). The mutation can be a change of a mathematical operator or a change of a constant value.

These children solution candidates are then evaluated in a further fitness evaluation step S2-5 for their quality by injecting them into the DLL, simulating the model and extracting the resulting energy costs again from the DLL. In a possible embodiment, the energy costs can then be used as the quality measure _{[KK1]}based on which the best solution candidates are selected for the next generation in a survivor selection step S2-6 as illustrated in Fig. 7. During the course of these generations, the quality measure (e.g. the energy costs for the system) are minimized. As a quality measure one can also use for example a degree of autarky.

The training process TP can be performed until a predefined termination criterion is reached and the training procedure TP ends in step S2-7.

As can be seen in Fig. 7 sub steps S2-3, S2-4, S2-5, S2-6 are reiterated or repeated in a loop until the termination criterion or criteria is fulfilled or reached.

The solution candidate in this context comprises an individual that holds one or multiple controller formulas represented by one or more subtrees as shown in Fig. 8 each representing _{[KK2]}a target value controller 6 within the energy system. The controller formula indicates the functional dependency of a target control value TV from other entities expressed by operators (/;*;+;-) or functional relationships such as log, exp etc. The symbolic regression forms a build-up subtree or formula and optimizes a specific parameter or value. In a preferred embodiment, the used artificial intelligence algorithm comprises a genetic programming algorithm with symbolic regression, in particular a Non-Dominated Sorting Genetic Algorithm II (NSGA-II). This algorithm tries not only to minimize the energy costs but contemporaneously also the complexity of the trained target value controllers 6 used in the simulation model, i.e. the symbolic regression trees contained in the solution candidates. In an alternative embodiment, the genetic programming algorithm can also comprise an Offspring Selection Genetic Algorithm (OSGA). This forms a single objective optimization algorithm which aims at minimizing the energy costs of a simulated energy system of a building.

Fig. 4 shows a schematic diagram for illustrating an architecture of an energy flow management system 1 according to the present invention. The energy flow management system 1 illustrated in Fig. 1 can be implemented in the illustrated exemplary embodiment in a data cloud. The energy flow management system 1 can comprise one or more user interfaces 2 and a simulation model database 3 in a cloud 4 as shown in Fig. 4. The simulation model database 3 can comprise a plurality of different predefined simulation models, e.g. for different kind of buildings. The specific simulation model can be selected from a group of predefined simulation models and loaded into a processing unit 5 forming a cloud-based computing resource used for customization of the selected simulation model in step S1 and for training at least one individual target value controller 6 in step S2. The training can be performed in step S2 in a training loop based on measurement data MDATA of the user's household or energy system loaded from a database 7 as shown in Fig. 4. If no measurement data MDATA is available, the artificial intelligence algorithm can also use generic default data for the user household for training the individual target value controller 6 using the customized simulation model of the user energy system. The generic default data can be supplied to the processing unit 5 from a database 8 as illustrated in Fig. 4. The individual target value controller can be executed to calculate in step S3 target values TVs encapsulated in a timetable (TT) 9 as illustrated in Fig. 4. The target values TVs calculated by the trained target value controllers 6 in step S3 as illustrated in the flow charts of Figs. 1 to 3 can be used to control the energy flow related functions of the controllable devices 12-i shown in Fig. 4 in step S4 of the flowcharts illustrated in Figs. 1 to 3. The target values TVs can be encapsulated for instance in a time grid of the timetable TT. In an alternative implementation, the target values TVs can also be time-stamped with system time stamps TS individually. The calculated target values TVs of the timetable TT can comprise parameter target values for device parameters of controllable devices. The calculated target values TVs can also comprise parameter limits of device parameters and/or control states of device parameters of controllable devices within the respective energy system.

In the illustrated embodiment of Fig. 4, a timetable (TT) 9 can be supplied to a central energy management entity of the energy system 10 and/or transferred to distributed energy management entities of controllable devices 12 within the energy system 10. In the illustrated embodiment of Fig. 4, the energy system 10 comprises an inverter 11 for different kinds of controllable devices 12-1 to 12-5. These controllable devices 12-i can comprise power-consuming devices such as households loads, power-storing devices such as electrical batteries, power-generating devices such as photovoltaic arrays connected to the inverter 11 or power-transforming devices such as a Power to Heat Conversion device, a Wallbox or a heat pump. The controllable devices 12-i may or may not be connected to the inverter 11. The dashed lines in Fig. 4 illustrate communication and data transfer connections via a data bus system whereas the straight uninterrupted lines represent energy flows between illustrated entities.

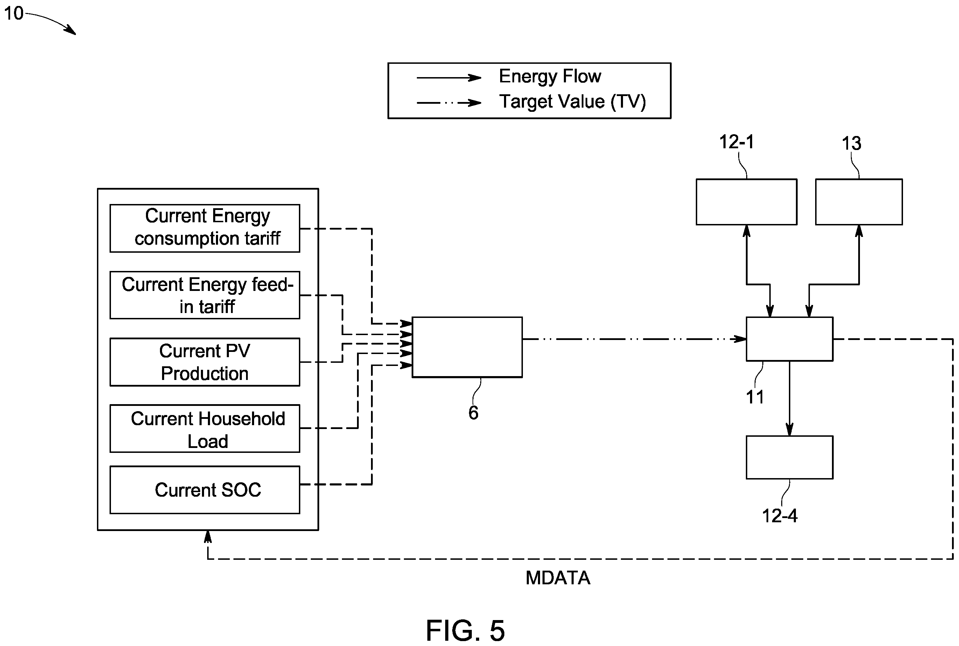

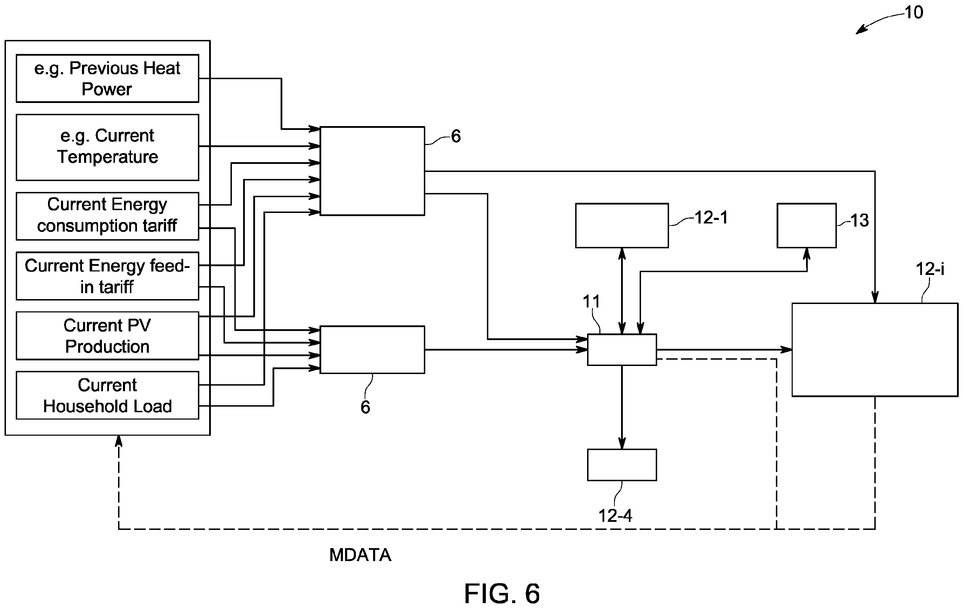

Figs. 5, 6 illustrate different possible embodiments of the computer-implemented method according to the present invention. Fig. 5 shows a first possible embodiment where a single target value controller 6 is trained and deployed on a control entity of an inverter 11 of the energy system 10. In the illustrated example, the inverter 11 is connected to a power-storing device formed by an electrical battery 12-4. The inverter 11 is further connected in the illustrated embodiment to a power supply grid 13 and to one or more household load devices 12-1 which form power-consuming devices. The inverter 11 of the energy system 10 can comprise a control entity forming a local system control unit of the respective energy system 10 of the user. The control entity implemented in the inverter 11 can be used to collect measurement data MDATA of the energy system 10. As shown in Fig. 5, the measurement data MDATA can comprise different kinds of data such as a current energy consumption tariff, a current energy feed-in tariff, the current photovoltaic production, the current household load or the current state of charge SoC of the battery 12-4. There can be additional measurement data MDATA including for instance electrical power received from the power supply grid 13 or supplied to the power supply grid 13. The target value controller 6 can be either trained in the cloud 4, for instance on the processing unit 5 illustrated in Fig. 4 or locally on the control entity of the inverter 11 shown in Fig. 5. The training of the target value controller 6 is performed in step S2 by an artificial intelligence algorithm based on the measurement data MDATA which may be collected by control entity of the inverter 11. The target values TVS provided by the trained target value controller 6 may for instance comprise a battery charge or discharge power for the battery 12-4 of the energy system 10. The target value TV can be either received from an external cloud-based control entity by the control entity of the inverter 11 or be calculated in real time by the control entity of the inverter 11.

Fig. 6 illustrates a further possible implementation of the computer-implemented method according to the present invention. As illustrated in Fig. 6, each or at least a portion of the controllable device 12-i of the energy system 10 can comprise an associated individual target value controller 6. In the illustrated embodiment, the inverter 11 of the energy system 10 comprises a control entity implementing an associated trained target value controller 6.

The controllable devices 12-i of the energy system 10 can comprise for instance a power to heat conversion device 12-2 or a heat pump 12-5 as illustrated in the schematic diagram of Fig. 4. The controllable devices 12-i can also comprise other kinds of controllable devices, for instance a charging unit used for charging an E-vehicle. For each controllable device 12-i, a target value TV can be provided by the associated trained target value controller 6 deployed on the control entity of the respective controllable device 12-i as shown in Fig. 6. The energy flow related functions of the controllable devices 12-i can be controlled in response to the target values TVs calculated for the respective controllable devices 12-i by the associated trained target value controllers 6. In the illustrated example of Fig. 6, the measurement data MDATA provided by measurement entities or sensors of the energy system 10 used for training the target value controllers can comprise measurement data MDATA related to different kinds of controllable devices 12-i such as previous power of the power to heat conversion device 12-2 or a current boiler temperature.

In a preferred embodiment, the simulation model of the energy system 10 does not only represent the electrical components of the energy system 10 but also represents the building itself. In this embodiment, the simulation model comprises an electrical simulation model and a thermal simulation model of the energy system 10 within the real world building of the user. In this embodiment, the simulation model comprises an electrical part and a connected thermal part. The computer-implemented method according to the present invention can be used for any kinds of energy systems, in particular for energy systems implemented in a real world building, for instance a residential building of a user.

A simulation model of the energy system 10 is created and customized using configuration data. The target value controllers are trained by use of an artificial intelligence algorithm using a heuristic optimization framework.

The trained target value controllers 6 can be evaluated during simulation using the customized simulation model to sort out trained target value controllers with respect to their performance. The trained target value controllers 6 found to perform best with respect to the energy cost reduction can be deployed or produced for physical implementation within the respective building. After deployment in the energy system 10 these high performance target value controllers 6 then optimize the energy flows of the controllable devices 12-i within the energy system 10 of the respective building. A genetic artificial intelligence algorithm can be used for training the target value controllers 6 to minimize energy costs within the building.

## Claims

1. A computer-implemented method for optimizing energy flows of controllable devices within an energy system (10), the method comprising the steps of:
- customizing (S1) a simulation model of the energy system (10) on the basis of configuration data;
- training (S2) by an artificial intelligence algorithm individual target value controllers (6) associated with controllable devices (12) of the energy system (10) based on measurement data and/or based on generic default data using the customized simulation model of said energy system (10);
- calculating (S3) by the trained target value controllers (6) target values (TVs) for the associated controllable devices (12) of the energy system (10); and
- controlling (S4) energy flow related functions of the controllable devices (12) of said energy system (10) in response to the target values (TVs) calculated by the trained target value controllers (6) for the respective controllable devices (12).

2. The computer-implemented method according to claim 1 wherein the simulation model of the energy system (10) is selected from a group of predefined simulation models stored in a database (3) and loaded into processing means (5) which customizes (S1) the loaded simulation model on the basis of configuration data input by a user via a user interface (2) and/or on the basis of configuration data received from the energy system (10).

3. The computer-implemented method according to claim 2 wherein a computing resource is used to execute the artificial intelligence algorithm to train (S2) the individual target value controllers (6) associated with the controllable devices (12) of the respective energy system (10) .

4. The computer-implemented method according to any of the preceding claims wherein the trained target value controllers are deployed on control entities comprising
a cloud-based control unit,
a local system control unit of the respective energy system (10) or
distributed control units of the controllable devices (12) of the respective energy system (10).

5. The computer-implemented method according to any of the preceding claims 1 to 4 wherein the deployed trained target value controllers (6) are executed by the respective control entities to calculate (S3) the target values (TVs) of the associated controllable devices (12) of said energy system (10).

6. The computer-implemented method according to any of the preceding claims 1 to 3 wherein the target values (TVs) for the controllable devices (12) calculated by the trained target value controllers (6) are encapsulated in a common timetable of the energy system (10) and/or encapsulated in separate device-specific timetables of the respective controllable devices (12) of said energy system (10).

7. The computer-implemented method according to claim 6 wherein the common timetable of the energy system (10) is transferred to a central energy management entity of the energy system (10), wherein the target values (TVs) of the common timetable are supplied by the central energy management entity of the energy system (10) to the associated controllable devices (12) of the energy system (10) to control (S4) the energy flow related functions of the respective controllable devices (12) of said energy system (10).

8. The computer-implemented method according to claim 6 wherein the device-specific timetables are transferred to the distributed energy management entities of the controllable devices (12) of said energy system (10), wherein the target values (TVs) of the device-specific timetables received by the distributed energy management entities of the respective controllable devices (12) of said energy system (10) are used to control energy flow related functions of the respective controllable devices (12) of said energy system (10).

9. The computer-implemented method according to any of the preceding claims wherein a retraining of the individual target value controllers (6) associated with the controllable devices (12) of said energy system (10) by the artificial intelligence algorithm is triggered by a triggering event comprising an elapsed retraining time period, a change of the energy system setup or a change of the energy system configuration and/or a detected change in the surrounding of the energy system (10) and/or a received retraining command.

10. The computer-implemented method according to any of the preceding claims 1 to 9 wherein the calculated target values (TVs) comprise parameter target values for device parameters of controllable devices,
parameter limits of device parameters and/or control states of the device parameters.

11. The computer-implemented method according to any of the preceding claims wherein the target values (TVs) calculated by the trained target value controllers are encapsulated in a time grid of the timetables and/or are time-stamped individually.

12. The computer-implemented method according to any of the preceding claims wherein the controllable devices (12) of said energy system (10) comprise:
power-consuming devices,
power-storing devices,
power-generating devices and/or
power-transforming devices of said energy system.

13. The computer-implemented method according to any of the preceding claims wherein the simulation model used for customization comprises an electrical simulation model and/or a thermal simulation model of an energy system (10) of a real world building, in particular a MATLAB simulation model.

14. The computer-implemented method according to any of the preceding claims wherein the artificial intelligence algorithm used for training (S2) the target value controllers (6) comprises a self-learning algorithm, in particular a genetic programming algorithm that performs symbolic regression.

15. An energy flow management system adapted to perform the computer-implemented method according to any of the preceding claims 1 to 14.
